# EUROPEAN PATENT SPECIFICATION

(11) **EP 2 637 242 B1**
(45) Date of publication and mention of the grant of the patent: **31.12.2014**
(21) Application number: 12782152.8
(22) Date of filing: 26.04.2012
(51) Int. Cl.: H01M 8/06, C01B 3/38, H01M 8/04

(54) **POWER GENERATOR AND METHOD OF OPERATING THE SAME**
STROMGENERATOR UND BETRIEBSVERFAHREN DAFÜR
GÉNÉRATEUR DE PUISSANCE ET SON PROCÉDÉ DE FONCTIONNEMENT

(30) Priority: 06.05.2011 JP 2011103420
(43) Date of publication of application: 11.09.2013
(73) Proprietor: Panasonic Corporation, Kadoma-shi, Osaka 571-8501 (JP)
(72) Inventor: MORITA, Junji, Osaka 540-6207 (JP); TATSUI, Hiroshi, Osaka 540-6207 (JP); YUKIMASA, Akinori, Osaka 540-6207 (JP); INOUE, Atsutaka, Osaka 540-6207 (JP); WAKAMATSU, Hidetoshi, Osaka 540-6207 (JP)
(74) Representative: Grünecker, Kinkeldey, Stockmair & Schwanhäusser
(86) International application number: PCT/JP2012/002885
(87) International publication number: WO 2012/153483

(56) References cited:
- WO-A1-2006/046621
- WO-A1-2007/123136
- JP-A- 2003 282 116
- JP-A- 2005 200 260
- JP-A- 2007 223 847
- JP-A- 2007 248 009
- JP-A- 2008 523 549

## Description

### Technical Field

The present invention relates to a power generator configured to supply heat and electricity, and to a method of operating the power generator.

### Background Art

A co-generation system is a system configured to: generate and supply electric power to a consumer, thereby covering the consumer's electricity load; and recover exhaust heat that is generated when generating the electric power and store the recovered exhaust heat in the form of hot water, thereby covering the consumer's hot water load. As one of such co-generation systems, there is a known co-generation system in which a fuel cell and a water heater are operated by using the same raw material (see Patent Literature 1, for example). Patent Literature 1 discloses a co-generation system configured such that: heat that is generated when a fuel cell performs electric power generation is stored via a heat exchanger in the form of hot water in a hot water storage tank; and a water heater heats up the stored hot water to a predetermined temperature. The fuel cell and the water heater are configured to operate by using the same raw material (which contains a hydrocarbon as a main component).

Fuel cells obtain electricity and heat through a reaction between a fuel and an oxidant (such as air or oxygen). The fuel contains hydrogen as a main component. However, since an infrastructure for supplying hydrogen has not been developed, fuel cells are normally equipped with a hydrogen generator configured to generate hydrogen by causing a reforming reaction of a raw material such as a hydrocarbon. There are various methods of reforming reaction such as steam reforming and partial oxidation reforming, and the hydrogen generator is configured to obtain energy necessary for steam reforming by combusting a raw material with a combustor (burner).

There is a known method of determining the air ratio of a burner for use in a fuel cell heater, the method including measuring the combustion state of the burner with an ionization sensor which the burner is provided with and adjusting the amount of air to be supplied to a raw material, thereby maintaining stable combustion of the burner (see Patent Literature 2, for example).

### Citation List

### Patent Literature

PTL 1: Japanese Laid-Open Patent Application Publication No. 2007-248009
PTL 2: Japanese National Phase PCT Laid-Open Publication No. 2008-523549

### Summary of Invention

### Technical Problem

There are cases where such a co-generation system as described above uses natural gas as a raw material. In a case where natural gas is used as a raw material, the raw material composition varies depending on the geographical region and season in which the natural gas is supplied. In order to allow the fuel cell to stably generate electric power, it is necessary to adjust operating conditions of the fuel cell in accordance with a variation in the raw material composition. A first condition in the operating conditions to be adjusted in accordance with the raw material composition is the amount of supply of a first raw material (hydrocarbon) and a second raw material (e.g., water or air) which are used for a reforming reaction, the first condition being adjusted for stably supplying a fuel that is necessary for electric power generation. A second condition in the operating conditions to be adjusted in accordance with the raw material composition is the amount of air to be supplied to the raw materials or fuel, the second condition being adjusted for stably obtaining energy for generating the fuel.

In the method of determining the air ratio of a burner for use in a fuel cell heater, which is disclosed in Patent Literature 2, the raw material (natural gas) is supplied to the burner at the start-up of a gas treatment system. In a state where a carbon monoxide concentration is reduced to such as level that a fuel can be supplied to the fuel cell, a reformate (fuel) that has not been used by the fuel cell is supplied to the burner.

Accordingly, during electric power generation by the fuel cell, the burner combusts hydrogen which is the fuel. Therefore, raw material composition information cannot be obtained from the ionization sensor, and it is difficult to adjust the first and second conditions with the fuel cell alone.

The present invention has been made in view of the above problems. An object of the present invention is to provide a power generator and a method of operating the same, which are capable of, even in a case where the raw material composition varies such as in a case where natural gas or the like is used as a raw material, adjusting supply amounts of the first raw material and the second raw material which are necessary raw materials for generating a fuel, based on combustion information from a combustion system and a fuel supply amount, thereby making it possible to perform stable electric power generation.

### Solution to Problem

In order to solve the above conventional problems, a power generator according to the present invention includes a fuel cell system, a combustion system, and a controller. The fuel cell system includes: a fuel cell configured to generate electric power by using a fuel and an oxidant; a reformer configured to generate the fuel through a reforming reaction between a first raw material containing a hydrocarbon and a second raw material which is water or an oxidant; a first raw material supply device configured to supply the first raw material to the reformer; a second raw material supply device configured to supply the second raw material to the reformer; and an oxidant supply device configured to supply the oxidant to the fuel cell. The combustion system includes; a first combustor configured to combust the first raw material; a third raw material supply device configured to supply the first raw material to the first combustor; a first air supply device configured to supply air to the first combustor; and a flame rod configured to measure an ionizing current based on the hydrocarbon contained in the first raw material that is being combusted by the first combustor. The controller controls the first raw material supply device and the second raw material supply device based on an amount of the first raw material supplied to the first combustor and a value of the ionizing current, such that an amount of the first raw material supplied to the reformer and an amount of the second raw material supplied to the reformer are in a predetermined ratio.

Accordingly, even with use of the first raw material such as natural gas in which a variation in gas composition occurs, the supply amount of the second raw material relative to the supply amount of the first raw material can be adjusted more suitably than conventional fuel cell systems. This makes it possible to perform stable fuel generation and electric power generation.

A power generator operating method according to the present invention is a method of operating a power generator including a fuel cell system, a combustion system, and a controller. The fuel cell system includes: a fuel cell configured to generate electric power by using a fuel and an oxidant; a reformer configured to generate the fuel through a reforming reaction between a first raw material containing a hydrocarbon and a second raw material which is water or an oxidant; a first raw material supply device configured to supply the first raw material to the reformer; a second raw material supply device configured to supply the second raw material to the reformer; and an oxidant supply device configured to supply the oxidant to the fuel cell. The combustion system includes; a first combustor configured to combust the first raw material; a third raw material supply device configured to supply the first raw material to the first combustor; a first air supply device configured to supply air to the first combustor; and a flame rod configured to measure an ionizing current based on the hydrocarbon contained in the first raw material that is being combusted by the first combustor. The method includes operating the first raw material supply device and the second raw material supply device based on an amount of the first raw material supplied to the first combustor and a value of the ionizing current, such that an amount of the first raw material supplied to the reformer and an amount of the second raw material supplied to the reformer are in a predetermined ratio.

Accordingly, even with use of the first raw material such as natural gas in which a variation in gas composition occurs, the supply amount of the second raw material relative to the supply amount of the first raw material can be adjusted more suitably than conventional fuel cell systems. This makes it possible to perform stable fuel generation and electric power generation.

### Advantageous Effects of Invention

According to the power generator and the method of operating the same of the present invention, even with use of the first raw material such as natural gas in which a variation in gas composition occurs, the supply amount of the second raw material relative to the supply amount of the first raw material can be adjusted more suitably than conventional fuel cell systems. This makes it possible to perform stable fuel generation and electric power generation.

### Brief Description of Drawings

[Fig. 1] Fig. 1 is a schematic diagram showing a schematic configuration of a power generator according to Embodiment 1.
[Fig. 2] Fig. 2 is a flowchart schematically showing operations of the power generator according to Embodiment 1.
[Fig. 3] Fig. 3 is a flowchart schematically showing operations of the power generator according to Embodiment 1.
[Fig. 4] Fig. 4 is a schematic diagram showing a schematic configuration of a power generator according to Embodiment 2.
[Fig. 5] Fig. 5 is a flowchart schematically showing operations of the power generator according to Embodiment 2.
[Fig. 6] Fig. 6 is a schematic diagram showing a schematic configuration of a power generator according to Variation 1 of Embodiment 2.
[Fig. 7] Fig. 7 is a flowchart schematically showing operations of the power generator according to Variation 1 of Embodiment 2.

### Description of Embodiments

Hereinafter, preferred embodiments of the present invention are described with reference to the drawings. In the drawings, the same or corresponding components are denoted by the same reference signs, and a repetition of the same description is avoided. In the drawings, only the components necessary for describing the present invention are shown, and the other components are omitted. Further, the present invention is not limited by the embodiments described below.

### (Embodiment 1)

A power generator according to Embodiment 1 includes a fuel cell system, a combustion system, and a controller. The power generator according to Embodiment 1 serves as an example where the fuel cell system includes: a fuel cell configured to generate electric power by using a fuel and an oxidant; a reformer configured to generate the fuel through a reforming reaction between a first raw material containing a hydrocarbon and a second raw material which is water or an oxidant; a first raw material supply device configured to supply the first raw material to the reformer; a second raw material supply device configured to supply the second raw material to the reformer; and an oxidant supply device configured to supply the oxidant to the fuel cell. Moreover, the combustion system includes; a first combustor configured to combust the first raw material; a third raw material supply device configured to supply the first raw material to the first combustor; a first air supply device configured to supply air to the first combustor; and a flame rod configured to measure an ionizing current value based on the hydrocarbon contained in the first raw material that is being combusted by the first combustor. Furthermore, the controller controls the first raw material supply device and the second raw material supply device based on an amount of the first raw material supplied to the first combustor and the ionizing current value, such that an amount of the first raw material supplied to the reformer and an amount of the second raw material supplied to the reformer are in a predetermined ratio.

In the power generator according to Embodiment 1, during a power generation operation of the fuel cell system, the controller may control the first raw material supply device and the second raw material supply device based on an amount of the first raw material supplied to the first combustor, the ionizing current value, and an amount of electric power generated by the fuel cell, such that an amount of the first raw material supplied to the reformer and an amount of the second raw material supplied to the reformer are in the predetermined ratio.

In the power generator according to Embodiment 1, during a power generation operation of the fuel cell system, the controller may control the first raw material supply device and the second raw material supply device based on an amount of the first raw material supplied to the first combustor, the ionizing current value, an amount of electric power generated by the fuel cell, and an amount of the first raw material supplied to the reformer, such that the amount of the first raw material supplied to the reformer and an amount of the second raw material supplied to the reformer are in the predetermined ratio.

In the power generator according to Embodiment 1, the controller may control the third raw material supply device and the first air supply device based on the ionizing current value, such that an amount of the first raw material supplied to the first combustor and an amount of the air supplied to the first combustor are in a predetermined ratio.

### [Configuration of Power Generator]

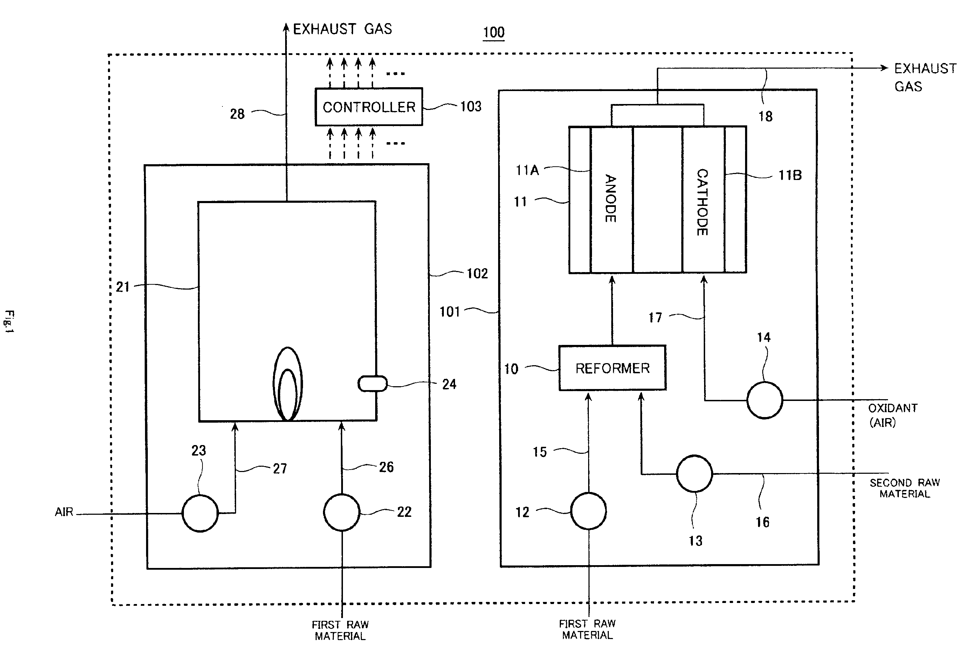

Fig. 1 is a schematic diagram showing a schematic configuration of the power generator according to Embodiment 1.

As shown in Fig. 1, a power generator 100 according to Embodiment 1 includes a fuel cell system 101, a combustion system 102, and a controller 103. The fuel cell system 101 includes a reformer 10, a fuel cell 11, a first raw material supply device 12, a second raw material supply device 13, and an oxidant supply device 14. The combustion system 102 includes a first combustor 21, a third raw material supply device 22, a first air supply device 23, and a flame rod 24.

The first raw material supply device 12 is connected to the reformer 10 via a first raw material supply passage 15. The first raw material supply device 12 is configured to supply a first raw material to the reformer 10 while adjusting the supply amount of the first raw material. Examples of the first raw material supply device 12 include a pump, a fan, and a blower. It should be noted that the proximal end of the first raw material supply passage I is connected to a natural gas infrastructure.

The second raw material supply device 13 is connected to the reformer 10 via a second raw material supply passage 16. The second raw material supply device 13 is configured to supply a second raw material to the reformer 10 while adjusting the supply amount of the second raw material. If the second raw material is water for use in steam reforming, the second raw material supply device 13 may be a rotating pump or a plunger pump, for example. If the second raw material is air for use in partial oxidation reforming, the second raw material supply device 13 may be a fan or a blower, for example.

The reformer 10 includes a reforming catalyst. The reforming catalyst is, for example, any substance capable of catalyzing a steam reforming reaction through which to generate a hydrogen-containing gas from a raw material and steam. Examples of the reforming catalyst include a ruthenium-based catalyst in which a catalyst carrier such as alumina carries ruthenium (Ru) and a nickel-based catalyst in which a catalyst carrier such as alumina carries nickel (Ni). Moreover, a catalyst capable of catalyzing an autothermal reforming reaction may be used as the reforming catalyst of the reformer 10.

In Embodiment 1, a catalyst catalyzing a steam reforming reaction is used as the reforming catalyst. Accordingly, the present embodiment adopts a mode in which the first raw material is natural gas and the second raw material is water. It should be noted that, if the reforming reaction in Embodiment 1 is a partial oxidation reforming reaction, the second raw material is oxygen or air.

The reformer 10 generates a hydrogen-containing gas through the reforming reaction between a supplied raw material and steam. The generated hydrogen-containing gas is supplied to the fuel cell 11 as a fuel.

Although in Embodiment 1 the hydrogen-containing gas generated by the reformer 10 is sent to the fuel cell 11 as a fuel, the present embodiment is not thus limited. For example, the fuel cell system 101 may include a shift converter and/or a carbon monoxide remover, the shift converter including a shift conversion catalyst (e.g., a copper-zinc based catalyst), the carbon monoxide remover including an oxidation catalyst (e.g., a ruthenium-based catalyst) or a methanation catalyst (e.g., a ruthenium-based catalyst), and the fuel cell system 101 may be configured such that the generated hydrogen-containing gas is sent to the fuel cell 11 after the hydrogen-containing gas has passed through these devices.

The oxidant supply device 14 is connected to the fuel cell 11 via an oxidant passage 17. The oxidant supply device 14 is configured to supply an oxidant (e.g., air) to the fuel cell 11 while adjusting the supply amount of the oxidant. Examples of the oxidant supply device 14 include a fan and a blower.

The fuel cell 11 includes an anode 11A and a cathode 11 B. In the fuel cell 11, the fuel and the oxidant supplied to the fuel cell 11 are supplied to the anode 11 A and the cathode 11 B, respectively. Then, the fuel supplied to the anode 11 A and the oxidant supplied to the cathode 11 B react with each other, and thereby electricity and heat are generated.

It should be noted that the generated electricity is supplied to an external electrical load (e.g., a household electrical appliance) via a power conditioner which is not shown. Also, the generated heat is recovered by a heating medium flowing through a heating medium passage which is not shown. The heat recovered by the heating medium can be used for heating water, for example. Moreover, the fuel that has not been consumed by the fuel cell 11, i.e., residual fuel, or the oxidant that has not been consumed by the fuel cell 11, i.e., residual oxidant, is discharged to the outside of the system of the power generator 100 via an exhaust gas passage 18 connected to the fuel cell 11.

In Embodiment 1, various fuel cells are applicable as the fuel cell 11, such as a polymer electrolyte fuel cell, a direct internal reforming solid oxide fuel cell, or an indirect internal reforming solid oxide fuel cell. Although in Embodiment 1 the fuel cell 11 and the reformer 10 are configured as separate components, the present embodiment is not thus limited. As an alternative, similar to a solid oxide fuel cell, the reformer 10 and the fuel cell 11 may be integrated. Further, in a case where the fuel cell 11 is configured as a direct internal reforming solid oxide fuel cell, the anode 11 A of the fuel cell 11 I and the reformer 10 may be integrated since the anode 11 A of the fuel cell 11 realizes a function of the reformer 10. Since the configuration of the fuel cell 11 is the same as that of a general fuel cell, a detailed description of the configuration of the fuel cell 11 is omitted.

The third raw material supply device 22 is connected to the first combustor 21 of the combustion system 102 via a first raw material supply passage 26. The third raw material supply device 22 is configured to supply the first raw material to the first combustor 21 while adjusting the supply amount of the first raw material. Examples of the third raw material supply device 22 include a pump, a fan, and a blower. It should be noted that the proximal end of the first raw material supply passage 26 is connected to the natural gas infrastructure.

The first air supply device 23 is connected to the first combustor 21 via an air supply passage 27. The first air supply device 23 is configured to supply air to the first combustor 21 while adjusting the supply amount of the air. Examples of the first air supply device 23 include a fan and a blower.

The first combustor 21 combusts the first raw material supplied from the third raw material supply device 22 and the air supplied from the first air supply device 23. As a result, a flue gas is generated. The generated flue gas is discharged to the outside of the power generator 100 through a flue gas passage 28.

The first combustor 21 is provided with the flame rod 24. The flame rod 24 is configured to measure the value of an ionizing current based on a hydrocarbon contained in the first raw material that is being combusted by the first combustor 21, and to output the measured value of the ionizing current to the controller 103.

It should be noted that the reason for the ionizing current value to be measured with use of the flame rod 24 is as follows: the first raw material, which is a hydrocarbon, generates an ionizing current when combusted, and the value of the ionizing current depends on the amount of carbon in the raw material; therefore, a carbon number in the first raw material per unit flow rate can be obtained from the value of the ionizing current and the supply amount of the first raw material. Specifically, in a case where the supply amount of the first raw material is fixed, the carbon number increases if the ionizing current value increases, and the carbon number decreases if the ionizing current value decreases.

Accordingly, in a case where the supply amount of the first raw material is fixed, and the supply amount of the first raw material and the supply amount of the second raw material are in a predetermined ratio, if the ionizing current value increases, the controller 103 controls the second raw material supply device 13 to increase the supply amount of the second raw material. Further, in the case where the supply amount of the first raw material is fixed, and the supply amount of the first raw material and the supply amount of the second raw material are in the predetermined ratio, if the ionizing current value decreases, the controller 103 controls the second raw material supply device 13 to decrease the supply amount of the second raw material.

The controller 103 is configured to control the fuel cell 11 to generate electric power in accordance with power consumption by an external load. The controller 103 includes: an arithmetic processing unit exemplified by a microprocessor, CPU, or the like; a storage unit configured as, for example, a memory storing programs for executing control operations. Through the loading and execution, by the arithmetic processing unit, of a predetermined control program stored in the storage unit, the controller 103 performs various controls of the power generator 100.

The controller 103 stores therein in advance a calculation formula and/or a table, which are used to determine a carbon number and a hydrogen number in the first raw material per unit flow rate based on the ionizing current value, an amount of the first raw material supplied to the first combustor 21, and an amount of oxygen supplied to the first combustor 21. The controller 103 stores therein in advance a ratio between a first raw material supply amount and a second raw material supply amount, the ratio being necessary for causing the reforming reaction.

Moreover, the controller 103 stores therein a calculation formula and/or a table, which are used to calculate, based on an electric current value of the fuel cell 11 and reforming reaction efficiency, a supply amount of the first raw material for generating the fuel necessary for electric power generation. In addition, the controller 103 stores therein a calculation formula and/or a table, which are used to calculate a supply amount of the oxidant necessary for electric power generation.

Furthermore, the controller 103 stores therein in advance a calculation formula and/or a table, which are used to determine a supply amount of the second raw material based on the following: a supply amount of the first raw material necessary for causing the fuel cell 11 to generate electric power in a particular amount; a carbon number in the first raw material per unit flow rate; and the ratio between the first raw material supply amount and the second raw material supply amount, the ratio being necessary for causing the reforming reaction.

The controller 103 uses the above calculation formulas and/or tables to calculate an amount of the first raw material supplied to the reformer 10 and an amount of the second raw material supplied to the reformer 10 based on the following: an amount of the first raw material supplied to the first combustor 21; an ionizing current value; and an amount of electric power generated by the fuel cell 11, which is obtained from a power conditioner not shown.

It should be noted that the controller 103 may be configured not only as a single controller, but as a group of multiple controllers which operate in cooperation with each other to control the power generator 100. Moreover, the controller 103 may be configured as a microcontroller. Furthermore, the controller 103 may be configured as an MPU, PLC (Programmable Logic Controller), logic circuit, or the like.

### [Operations of Power Generator]

First, a method of calculating an amount of the first raw material supplied to the reformer 10 and an amount of the second raw material supplied to the reformer 10 is described.

In a case where the first raw material is natural gas, the composition of the natural gas is a mixture of, for example, a hydrocarbon such as methane, propane, or butane with hydrogen or nitrogen. Accordingly, if the hydrocarbon is represented by CαβH (wherein α and β are positive numbers), the combustion of the first raw material is as shown in (Formula 1) below.

CαHβ + (2α+β/2) O₂ → αCO₂ + (β/2) H₂O (Formula 1)

In reality, as shown in (Formula 2) below, in order to stabilize the combustion of the first raw material, air is supplied such that the supply amount of oxygen becomes several times (e.g., 1.5 to 2) as great as the supply amount of the first raw material.

CαHβ + a (2α+β/2) O₂ → αCO₂ + (β/2) H₂O + (a-1) (2α+β/2) O₂ (Formula 2)

(wherein a is a positive number)

As described above, the controller 103 can calculate a carbon number (α in Formula 2) and a hydrogen number (β in Formula 2) in the first raw material per unit flow rate based on an ionizing current value measured by the flame rod 24, an amount of the first raw material supplied to the first combustor 21, and an amount of air supplied to the first combustor 21.

The reforming reaction of the first raw material is represented by (Formula 3) or (Formula 4) below.

CαHβ + 2αH₂O → ((4α+β)/2) H₂ + αCO₂ (Formula 3)

CαHβ + (1/2) αO₂ → (β/2) H₂ + αCO (Formula 4)

Typically, the reforming reaction is either a steam reforming reaction using water as the second raw material as shown in (Formula 3), or a partial oxidation reforming reaction using oxygen as the second raw material as shown in (Formula 4). Alternatively, the reforming reaction may be an autothermal reforming reaction which is a combination of steam reforming and partial oxidation reforming.

In reality, the supply amount of the second raw material relative to the supply amount of the first raw material is such that the second raw material is supplied in an amount that is several times (e.g., 2.5 to 3.0; predetermined ratio) as great as the supply amount of the first raw material from the viewpoints of, for example, prevention of carbonization of the first raw material, prevention of catalyst degradation, and thermal efficiency.

CαHβ + 2bαH₂O → ((4α+β)/2) H₂ + αCO₂ + 2 (b-1) αH₂O (Formula 5)

(wherein b is a positive number)

The fuel cell obtains electric power through reactions shown below.

Anode: H₂ → 2H⁺ + 2e⁻ (Formula 6)

Cathode: 1/2O₂ + 2H⁺ + 2e⁻→ H₂O (Formula 7)

Entire fuel cell: H₂ + 1/2O₂ → H₂O (Formula 8)

As shown in (Formula 6), (Formula 7), and (Formula 8), a power generation amount of the fuel cell 11 determines a fuel supply amount necessary for electric power generation.

Accordingly, the controller 103 can calculate an amount of the first raw material supplied to the reformer 10 and an amount of the second raw material supplied to the reformer 10 based on the calculated carbon number (α in Formula 2) and hydrogen number (β in Formula 2) in the first raw material per unit flow rate and (Formula 5). Specifically, at the start of the operation of the fuel cell system 101, the controller 103 can calculate an amount of the first raw material supplied to the reformer 10 and an amount of the second raw material supplied to the reformer 10 based on the following: the calculated carbon number (α in Formula 2) and hydrogen number (β in Formula 2) in the first raw material per unit flow rate; a target temperature of the reformer 10; (Formula 5); and reforming reaction efficiency.

During a power generation operation of the fuel cell system 101. the controller 103 can calculate an amount of the first raw material supplied to the reformer 10 and an amount of the second raw material supplied to the reformer 10 based on the following: the calculated carbon number (α in Formula 2) and hydrogen number (β in Formula 2) in the first raw material per unit flow rate; an amount of electric power generated by the fuel cell 11; (Formula 5); and reforming reaction efficiency. It should be noted that, in this case, the current supply amount of the first raw material to the reformer 10 may be referred to.

Next, operations of the power generator 100 according to Embodiment 1 are described with reference to Fig. 1 to Fig. 3. It should be noted that a power generation operation of the fuel cell system 101 and a combustion operation of the combustion system 102 in the power generator 100 are performed in the same manner as that of a power generation operation of a general fuel cell system and a combustion operation of a general combustion system. Therefore, a detailed description of these operations is omitted.

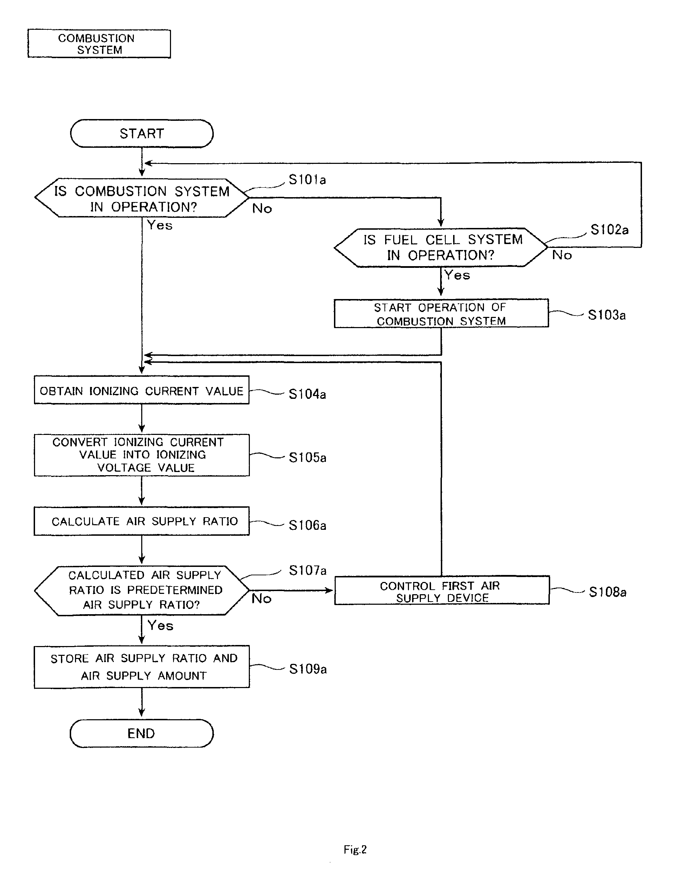

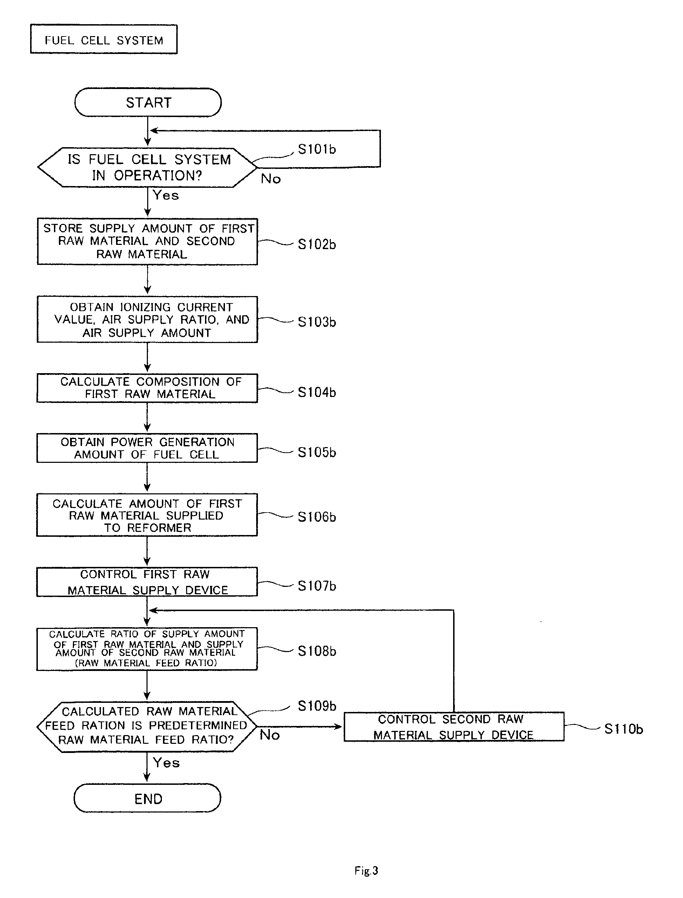

Fig. 2 and Fig. 3 are flowcharts schematically showing operations of the power generator according to Embodiment 1. Specifically, Fig. 2 is a flowchart schematically showing operations of the combustion system 102 in the power generator 100; and Fig. 3 is a flowchart showing operations of the fuel cell system 101 in the power generator 100.

Hereinafter, operations of the combustion system 102 in the power generator 100 according to Embodiment 1 are described with reference to Fig. 2.

As shown in Fig. 2, the controller 103 determines whether the combustion system 102 is in operation (step S101a). If the combustion system 102 is in operation (Yes in step S101a), the controller 103 proceeds to step S104a- It should be noted that operations in step S 104a and thereafter will be described below.

On the other hand, if the combustion system 102 is not in operation (No in step S101a), the controller 103 determines whether the fuel cell system 101 is in operation (step S 102a). If the fuel cell system 101 is not in operation (No in step S102a), the controller 103 returns to step S101a since it is not necessary to adjust the supply amount of the first raw material and the supply amount of the second raw material (raw material feed ratio adjustment). On the other hand, if the fuel cell system 101 is in operation (Yes in step S 102a), the controller 103 starts the operation of the combustion system 102 (step S 103a) and proceeds to step S 104a.

In step S104a, the controller 103 obtains from the flame rod 24 an ionizing current value measured by the flame rod 24. Then, the controller. 103 amplifies the ionizing current value obtained in step S104a, thereby converting the amplified value into an ionizing voltage value (step S105a).

Next, the controller 103 calculates a current air supply ratio based on the following: the ionizing voltage value obtained from the conversion in step S105a; and a correlation calculation formula stored in advance in the controller 103, the formula being used for calculating a correlation between an ionizing voltage value and an air supply ratio (step S106a). Next, the controller 103 determines whether the air supply ratio calculated in step S 106a is a predetermined air supply ratio (step S 107a). Here, the term air supply ratio refers to the ratio of an air supply amount to a first raw material supply amount. In Embodiment 1, from the standpoint of keeping a normal combustion state, the predetermined air supply ratio is set to be not less than 1.2 and not greater than 1.8.

If the air supply ratio calculated in step S 106a is not the predetermined air supply ratio (No in step S 1 07a), the controller 103 controls the operating amount of the first air supply device 23. Specifically, the controller 103 increases/decreases the amount of air supplied from the first air supply device 23 to the first combustor 21 (step S108a).

Then, the controller 103 repeats steps S 104a to S 108a until the air supply ratio calculated in step S 106a becomes the predetermined air supply ratio. On the other hand, if the air supply ratio calculated in step S 106a is the predetermined air supply ratio (Yes in step S 107a), the controller 103 proceeds to

### step S 109a.

In step S 109a, the controller 103 stores therein the air supply ratio calculated in step S 106a and the current amount of air supplied by the first air supply device 23, and ends the flow.

Next, operations of the fuel cell system 101 in the power generator 100 according to Embodiment 1 are described with reference to Fig. 3.

As shown in Fig. 3, the controller 103 determines whether the fuel cell system 101 is in operation (step S101b). It should be noted that a state where a command to start up the fuel cell system 101 has been inputted into the controller 103 is included in the definition of the fuel cell system 101 being in operation.

If the fuel cell system 101 is not in operation (No in step S102b), the controller 103 returns to step S101b since it is not necessary to perform the raw material feed ratio adjustment, and repeats step S101b until it is determined that the fuel cell system 101 is in operation.

On the other hand, if the fuel cell system 101 is in operation (Yes in step S 101 b), the controller 103 stores therein the current supply amount of the first raw material and the current supply amount of the second raw material (step S 102b). It should be noted that step S102b is skipped if the fuel cell system 101 is performing a start-up operation.

Next, the controller 103 obtains an ionizing current value from the flame rod 24, and also obtains the air supply ratio stored through the above-described operation (in step S106a) of the combustion system 102 and the amount of air supplied by the first air supply device 23 (step S103b). Then, the controller 103 calculates the composition of the first raw material (i.e., calculates a carbon number and a hydrogen number in the first raw material per unit flow rate) based on the ionizing current value, air supply ratio, and air supply amount obtained in step S 103 and a calculation formula and/or a table stored in the controller 103 (step S 1 04b).

Next, the controller 103 obtains the amount of electric power generated by the fuel cell 11 from a power conditioner which is not shown (step S105b). Then, the controller 103 calculates an amount of the first raw material to be supplied to the reformer 10 (step S106b) based on the following: the first raw material composition calculated in step S104b; the power generation amount of the fuel cell 11 obtained in step S105b; and a calculation formula and/or a table stored in the controller 103. Subsequently, the controller 103 controls the first raw material supply device 12, such that the supply amount of the first raw material becomes the amount calculated in step S106 (step S107b).

Next, the controller 103 calculates a ratio between a first raw material supply amount and a second raw material supply amount (raw material feed ratio) based on the supply amount of the second raw material stored in step S102 and the supply amount of the first raw material calculated in step S 106 (step S 108b). Then, the controller 103 determines whether the raw material feed ratio calculated in step S 108b is a predetermined raw material feed ratio (step S 109b). Here, the predetermined raw material feed ratio (supply amount of the second raw material/supply amount of the first raw material) is set to be in the range of 2.5 to 3.0 from the viewpoints of, for example, prevention of carbonization of the first raw material, prevention of catalyst degradation, and thermal efficiency.

If the raw material feed ratio calculated in step S108b is not the predetermined raw material feed ratio (No in step S 1 09b), the controller 103 controls the operating amount of the second raw material supply device 13. Specifically, the controller 103 increases/decreases the amount of second raw material supplied from the second raw material supply device 13 to the reformer 10 (step S110b).

Then, the controller 103 repeats steps S 108b to S110b until the raw material feed ratio calculated in step S 108b becomes the predetermined raw material feed ratio. On the other hand, if the raw material feed ratio calculated in step S 1 08b is the predetermined raw material feed ratio (Yes in step S 109b), the controller 103 ends the flow.

Thus, even if the raw material composition varies, the supply amount of the second raw material relative to the supply amount of the first raw material can be adjusted, which makes stable fuel generation and electric power generation possible.

As described above, even in a case where the raw material composition varies, the power generator 100 according to Embodiment 1 can adjust the supply amount of the second raw material relative to the supply amount of the first raw material, thereby making it possible to perform stable fuel generation and electric power generation.

In particular, conventional fuel cell systems are unable to respond to a situation where the raw material composition has varied during a power generation operation of the fuel cell system since the combustor in conventional fuel cell systems combusts an off gas that has not been used by the fuel cell.

However, the power generator 100 according to Embodiment 1 is configured to obtain an ionizing current value from the flame rod 24 included in the combustion system 102 (e.g., a boiler) which directly combusts the raw material. Therefore, even in a case where the raw material composition has varied during a power generation operation of the fuel cell system 101, the supply amount of the second raw material relative to the supply amount of the first raw material can be adjusted, which makes stable fuel generation and electric power generation possible.

### (Embodiment 2)

A power generator according to Embodiment 2 serves as an example where the fuel cell system further includes a second combustor configured to combust the fuel that has been used by the fuel cell and a second air supply device configured to supply air to the second combustor, the second combustor serving to heat the reformer, and the controller controls the first raw material supply device and the second air supply device based on an amount of the first raw material supplied to the first combustor, an amount of the air supplied to the first combustor, and the ionizing current value, such that an amount of the fuel supplied to the second combustor and an amount of the air supplied to the second combustor are in a predetermined ratio.

### [Configuration of Power Generator]

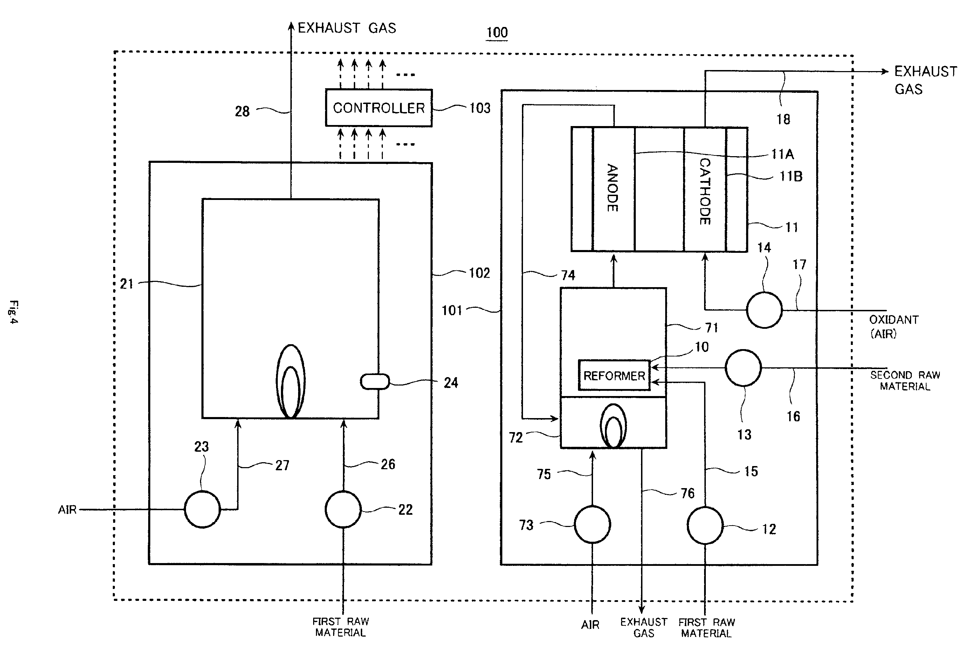

Fig. 4 is a schematic diagram showing a schematic configuration of the power generator according to Embodiment 2.

As shown in Fig. 4, the power generator 100 according to Embodiment 2 is fundamentally the same as the power generator 100 according to Embodiment 1, except that the fuel cell system 101 in the power generator 100 according to Embodiment 2 includes: a reforming apparatus 71 including the reformer 10 and a second combustor 72 configured to heat the reformer 10; and a second air supply device 73.

The fundamental configuration of the power generator 100 according to Embodiment 2 is the same as that of the power generator 100 according to Embodiment 1. However, the power generator 100 according to Embodiment 2 is different from the power generator 100 according to Embodiment 1, in that the fuel cell system 101 in the power generator 100 according to Embodiment 2 includes: the reforming apparatus 71 including the reformer 10 configured to cause a steam reforming reaction and the second combustor 72; and the second air supply device 73.

Among reforming reactions, the steam reforming reaction is different from partial oxidation reforming or autothermal reforming, in that the steam reforming reaction is an endothermic reforming reaction. Accordingly, it is necessary to heat the reforming apparatus by means of a combustor, heater, or the like. Therefore, in the power generator 100 according to Embodiment 2, the reforming apparatus 71 includes the reformer 10 and the second combustor 72.

The fuel cell 11 is connected to the second combustor 72 of the reforming apparatus 71 via an off fuel passage 74. Accordingly, an off fuel that has not been used at the anode 11A of the fuel cell 11 flows through the off fuel passage 74 and is supplied to the second combustor 72.

The second air supply device 73 is connected to the second combustor 72 via an air supply passage 75. The second air supply device 73 is configured to supply air to the second combustor 72 while adjusting the supply amount of the air. Examples of the second air supply device 73 include a fan and a blower.

The second combustor 72 performs combustion by using hydrogen which is the off fuel supplied to the second combustor 72 and the air supplied from the second air supply device 73. As a result, energy necessary for the reforming reaction is generated, and a flue gas is generated. The generated flue gas is discharged to the outside of the system of the power generator 100 through a flue gas passage 76.

The controller 103 stores therein in advance a predetermined air supply ratio for stable combustion in the second combustor 72, which uses a residual fuel. The term air supply ratio in Embodiment 2 refers to the ratio of an air supply amount to a residual fuel supply amount. It should be noted that, in Embodiment 2, the predetermined air supply ratio is set to be not less than 1.2 and not greater than 2.0 from the standpoint of maintaining a normal combustion state.

### [Operations of Power Generator]

First, a description is given regarding the amount of residual fuel supplied to the second combustor 72 and the amount of air supplied to the second combustor 72.

While the fuel cell 11 is generating electric power, the second combustor 72 combusts hydrogen which is a fuel. At the time, from the standpoint of maintaining a normal combustion state, air is supplied to the second combustor 72 such that the ratio of the supply amount of the air to the supply amount of the residual fuel (off fuel) becomes the predetermined air supply ratio (d in Formula 9).

H₂+1/2dO₂→H₂O+1/2(1-d)O₂ (Formula 9)

As previously described, the controller 103 can calculate a carbon number (α in Formula 2) and a hydrogen number (β in Formula 2) in the first raw material per unit flow rate based on an ionizing current value measured by the flame rod 24, an amount of the first raw material supplied to the first combustor 21, and an amount of air supplied to the first combustor 21. Also, a power generation amount of the fuel cell 11 determines a fuel supply amount necessary for electric power generation. Accordingly, with use of a calculation formula and/or a table stored in the controller 103 in advance, the controller 103 can calculate a residual fuel amount unused by the fuel cell 11 and supplied to the second combustor 72.

Based on the calculated residual fuel supply amount and the predetermined air supply ratio stored in the controller 103 in advance, the controller 103 can calculate an amount of air to be supplied to the second combustor 72.

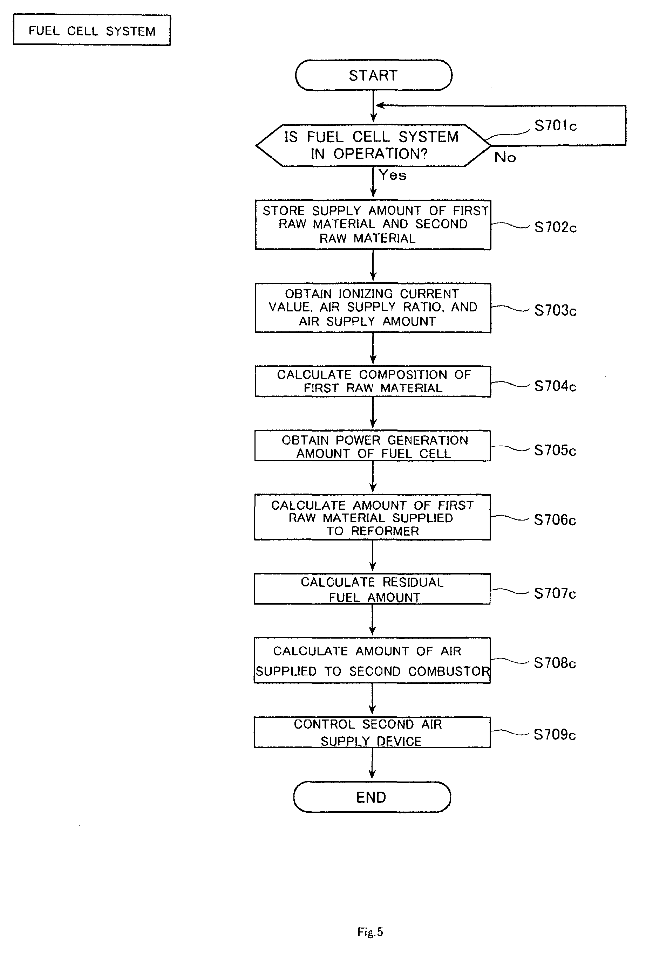

Next, operations of the power generator 100 according to Embodiment 2 are described with reference to Fig. 5. Although the operations of the power generator according to Embodiment 2 are fundamentally the same as those of the power generator according to Embodiment 1, the operations of the power generator according to Embodiment 2 additionally include an operation of stabilizing the combustion of the second combustor of the fuel cell system 101.

Fig. 5 is a flowchart schematically showing the operations of the power generator according to Embodiment 2. Specifically, the flowchart schematically shows operations of the fuel cell system 101.

As shown in Fig. 5, in steps S701c to S706c, the power generator 00 according to Embodiment 2 performs the same operations as those in steps S101b to S 106b shown in Fig. 3. Hereinafter, processing in step S707c and thereafter of Fig. 5 is described.

The controller 103 obtains the amount of electric power generated by the fuel cell 11 (step S705c), and calculates a fuel supply amount necessary for electric power generation and an amount of the first raw material to be supplied to the reformer 10 (step S706c). Then, the controller 103 calculates a residual fuel amount unconsumed by the fuel cell 11, based on the fuel supply amount calculated in step S706c (step S707c).

Next, based on the predetermined air supply ratio for the second combustor 72, which is stored in advance, and the residual fuel amount calculated in step S707c, the controller 103 calculates an amount of air to be supplied to the second combustor 72 (step S708c). Then, the controller 103 controls the second air supply device 73 such that the supply amount of air to the second combustor 72 becomes the amount calculated in step S708c (step S709c), and ends the flow.

The power generator 100 according to Embodiment 2 with the above-described configuration provides the same operational advantages as those provided by the power generator 100 according to Embodiment 1.

Although not shown in Fig. 5, the controller 103 calculates an amount of the first raw material supplied to the reformer 10 and an amount of the second raw material supplied to the reformer 10, and controls the second raw material supply device 13, in the same manner as in Embodiment 1.

### [Variation 1]

Next, a variation of the power generator 100 according to Embodiment 2 is described.

A power generator according to Variation 1 of Embodiment 2 serves as an example where the power generator further includes a temperature detector configured to detect a temperature of the reformer. In the power generator according to Variation 1 of Embodiment 2, during a power generation operation of the fuel cell system, the controller controls the first raw material supply device and the second raw material supply device based on an amount of the first raw material supplied to the first combustor, the ionizing current value, an amount of electric power generated by the fuel cell, and the temperature of the reformer, such that an amount of the first raw material supplied to the reformer and an amount of the second raw material supplied to the reformer are in the predetermined ratio.

### [Configuration of Power Generator]

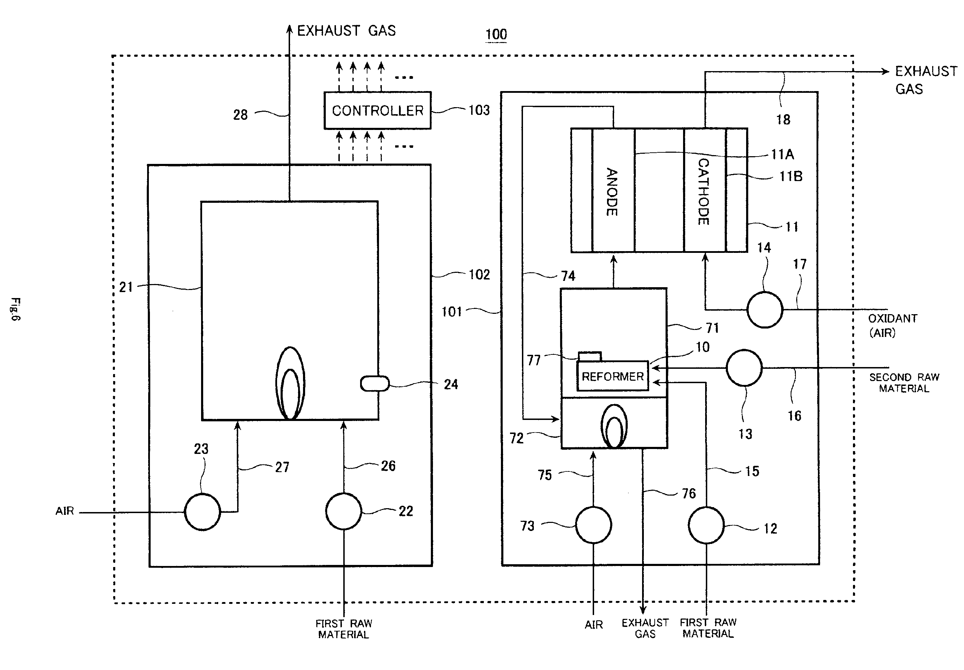

Fig. 6 is a schematic diagram showing a schematic configuration of the power generator according to Variation 1 of Embodiment 2.

As shown in Fig. 6, the fundamental configuration of the power generator 100 according to Variation 1 is the same as that of the power generator according to Embodiment 2. However, the power generator 100 according to Variation 1 is different from the power generator according to Embodiment 2, in that the power generator 100 according to Variation 1 includes a temperature detector 77 configured to detect the temperature of the reformer 10.

The temperature detector 77 is configured to detect the temperature of the reformer 10, and output the detected temperature to the controller 103. Examples of the temperature detector 77 include a thermocouple and a thermistor.

### [Operations of Power Generator]

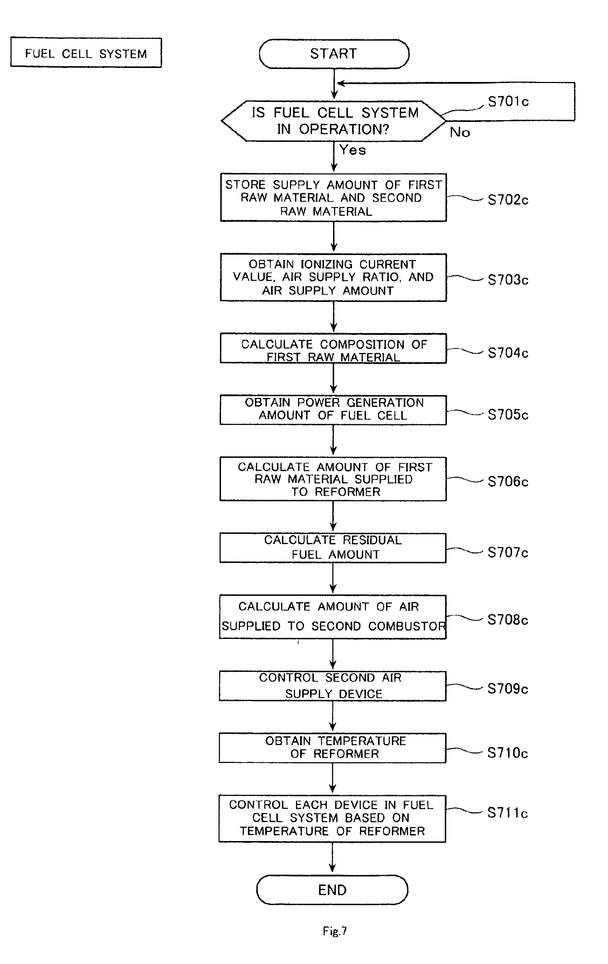

Fig. 7 is a flowchart schematically showing operations of the power generator according to Variation 1 of Embodiment 2. Specifically, the flowchart schematically shows operations of the fuel cell system 101.

As shown in Fig. 7, in steps S701c to S709c, the power generator 100 according to Variation 1 performs the same operations as those in steps S701c to S709c shown in Fig. 5. Processing in step S710c of Fig. 7 is described below.

The controller 103 controls the second air supply device 73 such that the supply amount of air becomes the amount calculated in step S708c (step S709c). Then, the controller 103 obtains from the temperature detector 77 the temperature of the reformer 10, which is detected by the temperature detector 77 (step S710c).

Next, the controller 103 controls each device in the fuel cell system 101 based on the temperature of the reformer 10, which is obtained in step S710 (step S711c). Specifically, for example, similar to conventional fuel cell systems, if the temperature of the reformer 10 obtained in step S710 is lower/higher than a predetermined temperature, the controller 103 re-calculates a first raw material supply amount, a second raw material supply amount, and an air supply amount. Then, the controller 103 controls the first raw material supply device 12, the second raw material supply device 13, and the second air supply device 73, such that the first raw material supply amount, the second raw material supply amount, and the air supply amount become the respective calculated amounts.

The power generator 100 according to Variation 1 with the above-described configuration provides the same operational advantages as those provided by the power generator 100 according to Embodiment 2.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention. In addition, various inventions can be made by suitable combinations of a plurality of components disclosed in the above embodiments.

### Industrial Applicability

According to the power generator and the method of operating the same of the present invention, a fuel gas can be stably generated even with use of a raw material in which a variation in gas composition occurs, such as natural gas. As a result, stable and efficient electric power generation is realized. Therefore, the power generator and the method of operating the same according to the present invention are useful in the field of fuel cells.

### Reference Signs List

- 10: reformer
- 11: fuel cell
- 11A: anode
- 11B: cathode
- 12: first raw material supply device
- 13: second raw material supply device
- 14: oxidant supply device
- 15: first raw material supply passage
- 16: second raw material supply passage
- 17: oxidant passage
- 18: exhaust gas passage
- 21: first combustor
- 22: third raw material supply device
- 23: first air supply device
- 24: flame rod
- 26: first raw material supply passage
- 27: air supply passage
- 28: flue gas passage
- 71: reforming apparatus
- 72: second combustor
- 73: second air supply device
- 74: off fuel passage
- 75: air supply passage
- 76: flue gas passage
- 100: power generator
- 101: fuel cell system
- 102: combustion system
- 103: controller

## Claims

1. A power generator comprising a fuel cell system, a combustion system, and a controller, wherein
the fuel cell system includes:
a fuel cell configured to generate electric power by using a fuel and an oxidant;
a reformer configured to generate the fuel through a reforming reaction between a first raw material containing a hydrocarbon and a second raw material which is water or an oxidant;
a first raw material supply device configured to supply the first raw material to the reformer;
a second raw material supply device configured to supply the second raw material to the reformer; and
an oxidant supply device configured to supply the oxidant to the fuel cell,
the combustion system includes;
a first combustor configured to combust the first raw material;
a third raw material supply device configured to supply the first raw material to the first combustor;
a first air supply device configured to supply air to the first combustor; and
a flame rod configured to measure an ionizing current value based on the hydrocarbon contained in the first raw material that is being combusted by the first combustor, and
the controller controls the first raw material supply device and the second raw material supply device based on an amount of the first raw material supplied to the first combustor and the ionizing current value, such that an amount of the first raw material supplied to the reformer and an amount of the second raw material supplied to the reformer are in a predetermined ratio.

2. The power generator according to claim 1, wherein
during a power generation operation of the fuel cell system, the controller controls the first raw material supply device and the second raw material supply device based on an amount of the first raw material supplied to the first combustor, the ionizing current value, and an amount of electric power generated by the fuel cell, such that an amount of the first raw material supplied to the reformer and an amount of the second raw material supplied to the reformer are in the predetermined ratio.

3. The power generator according to claim 1 or claim 2, wherein
during a power generation operation of the fuel cell system, the controller controls the first raw material supply device and the second raw material supply device based on an amount of the first raw material supplied to the first combustor, the ionizing current value, an amount of electric power generated by the fuel cell, and an amount of the first raw material supplied to the reformer, such that the amount of the first raw material supplied to the reformer and an amount of the second raw material supplied to the reformer are in the predetermined ratio.

4. The power generator according to any one of claims 1 to 3, further comprising a temperature detector configured to detect a temperature of the reformer, wherein
during a power generation operation of the fuel cell system, the controller controls the first raw material supply device and the second raw material supply device based on an amount of the first raw material supplied to the first combustor, the ionizing current value, an amount of electric power generated by the fuel cell, and the temperature of the reformer, such that an amount of the first raw material supplied to the reformer and an amount of the second raw material supplied to the reformer are in the predetermined ratio.

5. The power generator according to any one of claims 1 to 4, wherein the controller controls the third raw material supply device and the first air supply device based on the ionizing current value, such that an amount of the first raw material supplied to the first combustor and an amount of the air supplied to the first combustor are in a predetermined ratio.

6. The power generator according to any one of claims 1 to 5, wherein
the fuel cell system further includes a second combustor configured to combust the fuel that has been used by the fuel cell and a second air supply device configured to supply air to the second combustor, the second combustor serving to heat the reformer, and
the controller controls the first raw material supply device and the second air supply device based on an amount of the first raw material supplied to the first combustor, an amount of the air supplied to the first combustor, and the ionizing current value, such that an amount of the fuel supplied to the second combustor and an amount of the air supplied to the second combustor are in a predetemined ratio.

7. A method of operating a power generator including a fuel cell system, a combustion system, and a controller, wherein
the fuel cell system includes:
a fuel cell configured to generate electric power by using a fuel and an oxidant;
a reformer configured to generate the fuel through a reforming reaction between a first raw material containing a hydrocarbon and a second raw material which is water or an oxidant;
a first raw material supply device configured to supply the first raw material to the reformer;
a second raw material supply device configured to supply the second raw material to the reformer; and
an oxidant supply device configured to supply the oxidant to the fuel cell, and
the combustion system includes;
a first combustor configured to combust the first raw material;
a third raw material supply device configured to supply the first raw material to the first combustor;
a first air supply device configured to supply air to the first combustor; and
a flame rod configured to measure an ionizing current value based on the hydrocarbon contained in the first raw material that is being combusted by the first combustor,
the method comprising operating the first raw material supply device and the second raw material supply device based on an amount of the first raw material supplied to the first combustor and the ionizing current value, such that an amount of the first raw material supplied to the reformer and an amount of the second raw material supplied to the reformer are in a predetermined ratio.

8. The method of operating a power generator according to claim 7, wherein
the fuel cell system further includes a second combustor configured to combust the fuel that has been used by the fuel cell and a second air supply device configured to supply air to the second combustor, the second combustor serving to heat the reformer,
the method comprising operating the first raw material supply device and the second air supply device based on an amount of the first raw material supplied to the first combustor, an amount of the air supplied to the first combustor, and the ionizing current value, such that an amount of the fuel supplied to the second combustor and an amount of the air supplied to the second combustor are in a predetermined ratio.

## Patentansprüche

1. Energieerzeugungsvorrichtung, die ein Brennstoffzellensystem, ein Verbrennungssystem und eine Steuereinrichtung umfasst, wobei
das Brennstoffzellensystem enthält:
eine Brennstoffzelle, die so eingerichtet ist, dass sie elektrische Energie unter Verwendung eines Brennstoffs und eines Oxidans erzeugt;
einen Reformer, der so eingerichtet ist, dass er den Brennstoff über eine Reformierreaktion zwischen einem ersten Rohstoff, der einen Kohlenwasserstoff enthält, und
einem zweiten Rohstoff erzeugt, der Wasser oder ein Oxidans ist;
eine erste Rohstoff-Zuführeinrichtung, die so eingerichtet ist, dass sie dem Reformer den ersten Rohstoff zuführt;
eine zweite Rohstoff-Zuführeinrichtung, die so eingerichtet ist, dass sie dem Reformer den zweiten Rohstoff zuführt; und
eine Oxidans-Zuführeinrichtung, die so eingerichtet ist, dass sie der Brennstoffzelle
das Oxidans zuführt,
das Verbrennungssystem enthält:
eine erste Verbrennungseinrichtung, die so eingerichtet ist, dass sie den ersten Rohstoff verbrennt;
eine dritte Rohstoff-Zuführeinrichtung, die so eingerichtet ist, dass sie der ersten Verbrennungseinrichtung den ersten Rohstoff zuführt;
eine erste Luft-Zuführeinrichtung, die so eingerichtet ist, dass sie der ersten Verbrennungseinrichtung Luft zuführt; und
eine Ionisationselektrode (flame rod), die so eingerichtet ist, dass sie einen Ionisierungsstrom-Wert auf Basis des in dem ersten Rohstoff enthaltenen Kohlenwasserstoffs misst, der von der ersten Verbrennungseinrichtung verbrannt wird, und
die Steuereinrichtung die erste Rohstoff-Zuführeinrichtung sowie die zweite Rohstoff-Zuführeinrichtung auf Basis einer Menge des der ersten Verbrennungseinrichtung zugeführten ersten Rohstoffs und des Ionisierungsstrom-Wertes so steuert, dass eine Menge des dem Reformer zugeführten ersten Rohstoffs und eine Menge des dem Reformer zugeführten zweiten Rohstoffs in einem vorgegebenen Verhältnis sind.

2. Energieerzeugungsvorrichtung nach Anspruch 1, wobei
während eines Energieerzeugungsvorgangs des Brennstoffzellensystems die Steuereinrichtung die erste Rohstoff-Zuführeinrichtung und die zweite Rohstoff-Zuführeinrichtung auf Basis einer Menge des der ersten Verbrennungseinrichtung zugeführten ersten Rohstoffs, des Ionisierungsstrom-Wertes und einer durch die Brennstoffzelle erzeugten Menge elektrischer Energie so steuert, dass eine Menge des dem Reformer zugeführten ersten Rohstoffs und eine Menge des dem Reformer zugeführten zweiten Rohstoffs in dem vorgegebenen Verhältnis sind.

3. Energieerzeugungsvorrichtung nach Anspruch 1 oder Anspruch 2, wobei während eines Energieerzeugungsvorgangs des Brennstoffzellensystems die Steuereinrichtung die erste Rohstoff-Zuführeinrichtung und die zweite Rohstoff-Zuführeinrichtung auf Basis einer Menge des der ersten Verbrennungseinrichtung zugeführten ersten Rohstoffs, des Ionisierungsstrom-Wertes, einer durch die Brennstoffzelle erzeugten Menge elektrischer Energie und einer Menge des dem Reformer zugeführten ersten Rohstoffs so steuert, dass eine Menge des dem Reformer zugeführten ersten Rohstoffs und eine Menge des dem Reformer zugeführten zweiten Rohstoffs in dem vorgegebenen Verhältnis sind.

4. Energieerzeugungsvorrichtung nach einem der Ansprüche 1 bis 3, die des Weiteren eine Temperaturerfassungseinrichtung umfasst, die so eingerichtet ist, dass sie eine Temperatur des Reformers erfasst, wobei
während eines Energieerzeugungsvorgangs des Brennstoffzellensystems die Steuereinrichtung die erste Rohstoff-Zuführeinrichtung und die zweite Rohstoff-Zuführeinrichtung auf Basis einer Menge des der ersten Verbrennungseinrichtung zugeführten ersten Rohstoffs, des Ionisierungsstrom-Wertes, einer durch die Brennstoffzelle erzeugten Menge elektrischer Energie und der Temperatur des Reformers so steuert, dass eine Menge des dem Reformer zugeführten ersten Rohstoffs und eine Menge des dem Reformer zugeführten zweiten Rohstoffs in dem vorgegebenen Verhältnis sind.

5. Energieerzeugungsvorrichtung nach einem der Ansprüche 1 bis 4, wobei die Steuereinrichtung die dritte Rohstoff-Zuführeinrichtung und die erste Luft-Zuführeinrichtung auf Basis des Ionisierungsstrom-Wertes so steuert, dass eine Menge des der ersten Verbrennungseinrichtung zugeführten Rohstoffs und eine Menge der der zweiten Verbrennungseinrichtung zugeführten Luft in einem vorgegebenen Verhältnis sind.

6. Energieerzeugungsvorrichtung nach einem der Ansprüche 1 bis 5, wobei das Brennstoffzellensystem des Weiteren eine zweite Verbrennungseinrichtung, die so eingerichtet ist, dass sie das Brennstoffgas verbrennt, das von der Brennstoffzelle verbraucht worden ist, sowie eine zweite Luft-Zuführeinrichtung enthält, die so eingerichtet ist, dass sie der zweiten Verbrennungseinrichtung Luft zuführt, wobei die zweite Verbrennungseinrichtung dazu dient, den Reformer zu erhitzen, und
die Steuereinrichtung die erste Rohstoff-Zuführeinrichtung sowie die zweite Luft-Zuführeinrichtung auf Basis einer Menge des der ersten Verbrennungseinrichtung zugeführten Rohstoffs, einer Menge der der ersten Verbrennungseinrichtung zugeführten Luft und des Ionisierungsstrom-Wertes so steuert, dass eine Menge des der zweiten Verbrennungseinrichtung zugeführten Brennstoffs und eine Menge der der zweiten Verbrennungseinrichtung zugeführten Luft in einem vorgegebenen Verhältnis sind.

7. Verfahren zum Betreiben einer Energieerzeugungsvorrichtung, die ein Brennstoffzellensystem, ein Verbrennungssystem und eine Steuereinrichtung enthält, wobei das Brennstoffzellensystem enthält:
eine Brennstoffzelle, die so eingerichtet ist, dass sie elektrische Energie unter Verwendung eines Brennstoffs und eines Oxidans erzeugt;
einen Reformer, der so eingerichtet ist, dass er den Brennstoff über eine Reformierreaktion zwischen einem ersten Rohstoff, der einen Kohlenwasserstoff enthält, und
einem zweiten Rohstoff erzeugt, der Wasser oder ein Oxidans ist;
eine erste Rohstoff-Zuführeinrichtung, die so eingerichtet ist, dass sie dem Reformer den ersten Rohstoff zuführt;
eine zweite Rohstoff-Zuführeinrichtung, die so eingerichtet ist, dass sie dem Reformer den zweiten Rohstoff zuführt; und
eine Oxidans-Zuführeinrichtung, die so eingerichtet ist, dass sie der Brennstoffzelle
das Oxidans zuführt,
das Verbrennungssystem enthält:
eine erste Verbrennungseinrichtung, die so eingerichtet ist, dass sie den ersten Rohstoff verbrennt;
eine dritte Rohstoff-Zuführeinrichtung, die so eingerichtet ist, dass sie der ersten Verbrennungseinrichtung den ersten Rohstoff zuführt;
eine erste Luft-Zuführeinrichtung, die so eingerichtet ist, dass sie der ersten Verbrennungseinrichtung Luft zuführt; und
eine Ionisationselektrode (flame rod), die so eingerichtet ist, dass sie einen Ionisierungsstrom-Wert auf Basis des in dem ersten Rohstoff enthaltenen Kohlenwasserstoffs misst, der von der ersten Verbrennungseinrichtung verbrannt wird, und das Verfahren umfasst, dass die erste Rohstoff-Zuführeinrichtung sowie die zweite Rohstoff-Zuführeinrichtung auf Basis einer Menge des der ersten Verbrennungseinrichtung zugeführten Rohstoffs und des Ionisierungsstrom-Wertes so betrieben werden, dass eine Menge des dem Reformer zugeführten ersten Rohstoffs und eine Menge des dem Reformer zugeführten zweiten Rohstoffs in einem vorgegebenen Verhältnis sind.

8. Verfahren zum Betreiben einer Energieerzeugungsvorrichtung nach Anspruch 7, wobei das Brennstoffzellensystem des Weiteren eine zweite Verbrennungseinrichtung, die so eingerichtet ist, dass sie das Brennstoffgas verbrennt, das von der Brennstoffzelle verbraucht worden ist, sowie eine zweite Luft-Zuführeinrichtung enthält, die so eingerichtet ist, dass sie der zweiten Verbrennungseinrichtung Luft zuführt, wobei die zweite Verbrennungseinrichtung dazu dient, den Reformer zu erhitzen, und
das Verfahren umfasst, dass die erste Rohstoff-Zuführeinrichtung sowie die zweite Rohstoff-Zuführeinrichtung auf Basis einer Menge des der ersten Verbrennungseinrichtung zugeführten Rohstoffs, einer Menge der der ersten Verbrennungseinrichtung zugeführten Luft und des Ionisierungsstrom-Wertes so betrieben werden, dass eine Menge des der zweiten Verbrennungseinrichtung zugeführten Brennstoffs und eine Menge der der zweiten Verbrennungseinrichtung zugeführten Luft in einem vorgegebenen Verhältnis sind.

## Revendications

1. Génératrice de puissance comprenant un système de pile à combustible, un système de combustion et un contrôleur, dans lequel :
le système de pile à combustible inclut :
une pile à combustible configurée pour générer de la puissance électrique en utilisant un carburant et un oxydant,
un reformeur configuré pour générer le carburant par l'intermédiaire d'une réaction de reformage entre une première matière brute contenant un hydrocarbure et une deuxième matière brute qui est de l'eau ou un oxydant,
un premier dispositif d'alimentation en matière brute configuré pour fournir la première matière brute au reformeur,
un deuxième dispositif d'alimentation en matière brute configuré pour fournir la deuxième matière brute au reformeur, et
un dispositif d'alimentation en oxydant configuré pour fournir l'oxydant à la pile à combustible,
le système de combustion inclut :
un premier brûleur configuré pour brûler la première matière brute,
un troisième dispositif d'alimentation en matière brute configuré pour fournir la première matière brute au premier brûleur, et
un premier dispositif d'alimentation en air configuré pour fournir de l'air au premier brûleur, et
un détecteur de flamme configuré pour mesurer la valeur d'un courant ionisant sur la base de l'hydrocarbure contenu dans la première matière brute brûlée par le premier brûleur, et
le contrôleur commande le premier dispositif d'alimentation en matière brute et le deuxième dispositif d'alimentation en matière brute sur la base d'une quantité de la première matière brute fournie au premier brûleur ainsi que sur la valeur du courant ionisant de telle sorte que la quantité de première matière brute fournie au reformeur et la quantité de la deuxième matière brute fournie au reformeur se trouvent en un rapport prédéterminé.

2. Génératrice de puissance selon la revendication 1, dans laquelle :
pendant une opération de génération de puissance du système de pile à combustible, le contrôleur commande le premier dispositif d'alimentation en matière brute et le deuxième dispositif d'alimentation en matière brute sur la base de la quantité de la première matière brute fournie au premier brûleur, de la valeur du courant ionisant et de la quantité de puissance électrique générée par la pile à combustible de telle sorte que la quantité de première matière brute fournie au reformeur et la quantité de deuxième matière brute fournie au reformeur se trouvent dans le rapport prédéterminé.

3. Génératrice de puissance selon la revendication 1 ou la revendication 2, dans laquelle :
pendant une opération de génération de puissance du système de pile à combustible, le contrôleur commande le premier dispositif d'alimentation en matière brute et le deuxième dispositif d'alimentation en matière brute sur la base de la quantité de la première matière brute fournie au premier brûleur, de la valeur du courant ionisant, de la quantité de puissance électrique générée par la pile à combustible et de la quantité de la première matière brute fournie au reformeur de telle sorte que la quantité de première matière brute fournie au reformeur et la quantité de deuxième matière brute fournie au reformeur se trouvent dans le rapport prédéterminé.

4. Génératrice de puissance selon l'une quelconque des revendications 1 à 3, comprenant en outre un détecteur de température configuré pour détecter la température du reformeur, dans laquelle :
pendant une opération de génération de puissance du système de pile à combustible, le contrôleur commande le premier dispositif d'alimentation en matière brute et le deuxième dispositif d'alimentation en matière brute sur la base de la quantité de la première matière brute fournie au premier brûleur, de la valeur du courant ionisant, de la valeur de puissance électrique générée par la pile à combustible et de la température du reformeur de telle sorte que la quantité de première matière brute fournie au reformeur et la quantité de deuxième matière brute fournie au reformeur se trouvent dans le rapport prédéterminé.

5. Génératrice de puissance selon l'une quelconque des revendications 1 à 4, dans laquelle le contrôleur commande le troisième dispositif d'alimentation en matière brute et le premier dispositif d'alimentation en air sur la base de la valeur du courant ionisant de telle sorte que la quantité de première matière brute fournie au premier brûleur et la quantité de l'air fournie au premier brûleur se trouvent en un rapport prédéterminé.

6. Génératrice de puissance selon l'une quelconque des revendications 1 à 5, dans laquelle :
le système de pile à combustible inclut en outre un second brûleur configuré pour brûler le carburant qui a été utilisé par la pile à combustible et par un deuxième dispositif d'alimentation en air configuré pour fournir de l'air au deuxième brûleur, le deuxième brûleur servant à chauffer le reformeur, et
le contrôleur commande le premier dispositif d'alimentation en matière brute et le deuxième dispositif d'alimentation en matière brute sur la base de la quantité de la première matière brute fournie au premier brûleur, de la quantité d'air fournie au premier brûleur et de la valeur du courant ionisant de telle sorte que la quantité de carburant fournie au second brûleur et la quantité d'air fournie au second brûleur se trouvent en un rapport prédéterminé.

7. Procédé de mise en oeuvre d'une génératrice de puissance incluant un système de pile à combustible, un système de combustion et un contrôleur, dans lequel :
le système de pile à combustible inclut :
une pile à combustible configurée pour générer de la puissance électrique en utilisant un carburant et un oxydant,
un reformeur configuré pour générer le carburant par l'intermédiaire d'une réaction de reformage entre une première matière brute contenant un hydrocarbure et une deuxième matière brute qui est de l'eau ou un oxydant,
un premier dispositif d'alimentation en matière brute configuré pour fournir la première matière brute au reformeur,
un deuxième dispositif d'alimentation en matière brute configuré pour fournir la deuxième matière brute au reformeur, et
un dispositif d'alimentation en oxydant configuré pour fournir l'oxydant à la pile à combustible, et
le système de combustion inclut :
un premier brûleur configuré pour brûler la première matière brute,
un troisième dispositif d'alimentation en matière brute configuré pour fournir la première matière brute au premier brûleur,
un premier dispositif d'alimentation en air configuré pour fournir de l'air au premier brûleur, et
un détecteur de flamme configuré pour mesurer la valeur d'un courant ionisant sur la base de l'hydrocarbure contenu dans la première matière brute qui est brûlée par le premier brûleur, et
le procédé comprenant la mise en oeuvre du premier dispositif d'alimentation en matière brute et du deuxième dispositif d'alimentation en matière brute sur la base d'une quantité de la première matière brute fournie au premier brûleur ainsi que sur la valeur du courant ionisant de telle sorte que la quantité de première matière brute fournie au reformeur et la quantité de la deuxième matière brute fournie au reformeur se trouvent en un rapport prédéterminé.

8. Procédé de mise en oeuvre d'une génératrice de puissance selon la revendication 7, dans lequel :
le système de pile à combustible inclut de plus un second brûleur configuré pour brûler le carburant qui a été utilisé par la pile à combustible et un second dispositif d'alimentation en air configuré pour fournir de l'air au second brûleur, le second brûleur servant à chauffer le reformeur,
le procédé comprenant la mise en oeuvre du premier dispositif d'alimentation en matière brute et le deuxième dispositif d'alimentation en matière brute sur la base de la quantité de la première matière brute fournie au premier brûleur, de la quantité de l'air fourni au premier brûleur et de la valeur du courant ionisant de telle sorte que la quantité de carburant fourni au second brûleur et la quantité de l'air fourni au second brûleur se trouvent en un rapport prédéterminé.
